# EUROPEAN PATENT APPLICATION

(11) **EP 4 644 687 A1**
(43) Date of publication of application: **05.11.2025**
(21) Application number: 23921280.6
(22) Date of filing: 30.10.2023
(51) Int. Cl.: F02M 31/18, F01N 5/02, F01P 7/16, F02M 21/06, F02M 31/16

(54) **AMMONIA GAS SUPPLY SYSTEM AND INTERNAL COMBUSTION ENGINE SYSTEM**

(30) Priority: 09.02.2023 JP 2023018336
(71) Applicant: MITSUBISHI HEAVY INDUSTRIES ENGINE & TURBOCHARGER, LTD., Sagamihara-shi, Kanagawa 252-5293 (JP)
(72) Inventor: UEDA, Hiroyuki, Tokyo 100-8332 (JP)
(74) Representative: Studio Torta S.p.A.
(86) International application number: PCT/JP2023/039078
(87) International publication number: WO 2024/166457

(57) **Abstract**

An ammonia gas supply system includes: an ammonia storage tank configured to be capable of storing liquid ammonia; a tank heater configured to heat the ammonia storage tank and gasify the liquid ammonia stored inside the ammonia storage tank; and an ammonia gas introduction line for introducing an ammonia gas obtained by gasifying the liquid ammonia inside the ammonia storage tank to an internal combustion engine.

## Description

### TECHNICAL FIELD

The present disclosure relates to an ammonia gas supply system for supplying an ammonia gas to an internal combustion engine, and an internal combustion engine system including the ammonia gas supply system.

The present application claims priority based on Japanese Patent Application No. 2023-018336 filed on February 9, 2023 with the Japanese Patent Office, the contents of which are incorporated herein by reference.

### BACKGROUND ART

Patent Document 1 discloses a fuel tank with a pump and a heat exchanger disposed in a fuel pipe system in an engine which uses liquid ammonia as a fuel, as devices for controlling the temperature and the pressure of liquid ammonia supplied.

### Citation List

### Patent Literature

Patent Document 1: WO2011/136130A

### SUMMARY

### Problems to be Solved

Ammonia is normally stored in a container in a state of liquid that is cooled and pressurized (liquid ammonia), and it is necessary to heat the liquid ammonia by some method in a case where an ammonia gas is used as a fuel for an internal combustion engine. To stably operate an internal combustion engine that uses an ammonia gas as a fuel, it is necessary to supply the ammonia gas stably. The flow rate of ammonia gas required by the internal combustion engine changes depending on a change in the operation state of the internal combustion engine (load or rotation speed of the internal combustion engine), and thus it is necessary to control the pressure and the temperature of the ammonia gas so as to be in line with the change in the flow rate. Herein, temperature adjustment and pressure adjustment at a fuel pipe for introducing the ammonia gas to the internal combustion engine may become unstable when the supply amount of the ammonia gas to the internal combustion engine surges or drops sharply.

In view of the above, at least one embodiment of the present disclosure is to provide an ammonia gas supply system and an internal combustion engine system capable of stably supplying an ammonia gas to the internal combustion engine even when the operation state of the internal combustion engine changes.

### Solution to the Problems

An ammonia gas supply system according to at least one embodiment of the present disclosure includes: an ammonia storage tank configured to be capable of storing liquid ammonia; a tank heater configured to heat the ammonia storage tank and gasify the liquid ammonia stored inside the ammonia storage tank; and an ammonia gas introduction line for introducing an ammonia gas obtained by gasifying the liquid ammonia inside the ammonia storage tank to an internal combustion engine.

An internal combustion engine system according to at least one embodiment of the present disclosure includes: an internal combustion engine which uses an ammonia gas as a fuel; and the above described ammonia gas supply system.

### Advantageous Effects

According to at least one embodiment of the present disclosure, provided are an ammonia gas supply system and an internal combustion engine system capable of stably supplying an ammonia gas to the internal combustion engine even when the operation state of the internal combustion engine changes.

### BRIEF DESCRIPTION OF DRAWINGS

FIG. 1 is a schematic diagram of an internal combustion engine according to an embodiment of the present disclosure.
FIG. 2 is a schematic diagram of an internal combustion engine according to an embodiment of the present disclosure.
FIG. 3 is a schematic diagram of an internal combustion engine according to an embodiment of the present disclosure.
FIG. 4 is a schematic cross-sectional view of an ammonia storage tank and a tank heater of an ammonia gas supply system according to an embodiment of the present disclosure.
FIG. 5 is a diagram showing a modified example of the ammonia gas supply system depicted in FIG. 2.
FIG. 6 is a flow chart showing an example of control in the ammonia gas supply system depicted in FIG. 3.
FIG. 7 is a diagram showing a modified example of the ammonia gas supply system depicted in FIG. 3.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

### (Internal combustion engine system)

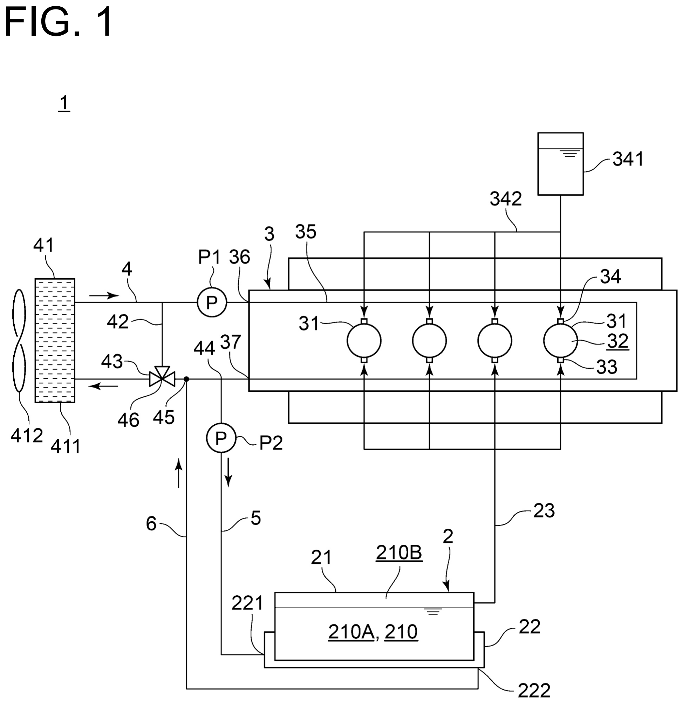

FIGs. 1 to 3 are each a schematic diagram of an internal combustion engine 1 according to an embodiment of the present disclosure. As depicted in FIGs. 1 to 3, an ammonia gas supply system 2 according to some embodiments is for supplying an ammonia gas to an internal combustion engine 3 which uses an ammonia gas as a fuel, and is mounted to an internal combustion engine system 1. The internal combustion engine system 1 includes the ammonia gas supply system 2 and the internal combustion engine 3.

### (Internal combustion engine)

As depicted in FIGs. 1 to 3, the internal combustion engine 3 includes at least one cylinder 31 (in the illustrated example, a plurality of cylinders 31). Each of the plurality of cylinders 31 includes a combustion chamber 32 for combusting a fuel. The internal combustion engine 3 is configured to combust a fuel (such as a gas fuel like an ammonia gas and a liquid fuel like a gas oil or gasoline) and a combustion gas (e.g., air) in the combustion chamber 32 of each of the plurality of cylinders 31.

In the illustrated embodiment, the internal combustion engine 3 further includes at least one gas fuel supply device 33 (in the illustrated example, a plurality of gas fuel supply devices 33) configured to supply an ammonia gas (gas fuel) to the inside of the internal combustion engine 3 (e.g., the combustion chambers 32 and air supply pipes for supplying air to the combustion chambers 32), and at least one liquid fuel supply device 34 (in the illustrated example, a plurality of liquid fuel supply devices 34) configured to supply a liquid fuel to the inside of the internal combustion engine 3 (e.g., the combustion chambers 32 and air supply pipes for supplying air to the combustion chambers 32). The gas fuel supply device 33 and the liquid fuel supply device 34 may be fuel injection valves configured to inject a fuel. The internal combustion engine 3 may further include an ignition device (ignition plug) configured to ignite air-fuel mixture of a fuel and air in the combustion chamber 32. The gas fuel supply device 33, the liquid fuel supply device 34, and the ignition device are provided individually for each of the cylinders 31.

In the illustrated embodiment, the internal combustion engine 3 further includes a liquid fuel storage tank 341 configured to store a liquid fuel and a liquid fuel introduction line 342 for introducing the liquid fuel to each of the plurality of liquid fuel supply devices 34 from the liquid fuel storage tank 341. The liquid fuel introduction line 342 is for forming a flow passage for allowing the liquid fuel to flow through, and is formed of a pipe, for instance.

### (Ammonia gas supply system)

As depicted in FIGs. 1 to 3, the ammonia gas supply system 2 according to some embodiments includes an ammonia storage tank 21, a tank heater 22, and an ammonia gas introduction line 23. The ammonia storage tank 21 is configured to store liquid ammonia. The tank heater 22 is configured to heat the ammonia storage tank 21 and gasify the liquid ammonia stored inside the ammonia storage tank 21. The ammonia gas introduction line 23 is a line (supply system) for introducing the ammonia gas obtained by gasifying the liquid ammonia inside the ammonia storage tank 21 to the internal combustion engine 3.

In the illustrated embodiment, the ammonia storage tank 21 is configured to define an internal space 210 for storing liquid ammonia and an ammonia gas (ammonia in a gas state) inside the ammonia storage tank 21. The internal space 210 includes a liquid phase part 210A for storing liquid ammonia (ammonia in a liquid state) and a gas phase part 210B for storing an ammonia gas formed above the liquid phase part 210A. The liquid ammonia stored in the liquid phase part 210A is gasified by external heat input applied via the tank heater 22 and is turned into an ammonia gas.

The ammonia gas introduction line 23 has a first end side (upstream end) connected to the ammonia storage tank 21 and a second end side (downstream end) connected to the internal combustion engine 3. The ammonia gas introduction line 23 is for forming a flow passage for allowing the ammonia gas to flow through, and is formed of a pipe, for instance. The flow passage formed in the ammonia gas introduction line 23 is in communication with the gas phase part 210B, and the ammonia gas is taken out from the gas phase part 210B to the ammonia gas introduction line 23.

As depicted in the drawing, the ammonia gas introduction line 23 may be branched at the second end side, and each of the plurality of downstream ends may be connected to a corresponding gas fuel supply device 33. The ammonia gas stored in the ammonia storage tank 21 has a higher pressure than the gas in the gas recipient (e.g., the combustion chamber 32 or the air supply pipe for supplying air to the combustion chamber 32), and is introduced as a fuel into the internal combustion engine 3 (a plurality of gas fuel supply devices 33) by pressure difference via the ammonia gas introduction line 23.

To stably operate the internal combustion engine 3 that uses an ammonia gas as a fuel, it is necessary to supply the ammonia gas stably. The flow rate of ammonia gas required by the internal combustion engine 3 changes depending on a change in the operation state of the internal combustion engine 3 (load or rotation speed of the internal combustion engine 3). In the ammonia gas supply system 2, it is necessary to control the pressure and the temperature of the ammonia gas so as to be in line with the change in the flow rate of the ammonia gas required by the internal combustion engine 3.

As depicted in FIGs. 1 to 3, the ammonia gas supply system 2 according to some embodiments includes the above described ammonia storage tank 21, the above described tank heater 22, and the above described ammonia gas introduction line 23.

With the above configuration, it is possible to guide the ammonia gas that has been gasified inside the ammonia storage tank 21 by the tank heater 22 to the internal combustion engine 3 via the ammonia gas introduction line 23. The ammonia storage tank 21 has a large capacity for storing an ammonia gas, and thus it is possible to supply an ammonia gas to the internal combustion engine 3 stably via the ammonia gas introduction line 23. That is, while the flow rate of ammonia gas required by the internal combustion engine 3 may change depending on the load or rotation speed of the internal combustion engine 3, it is possible to supply a required amount of ammonia gas to the internal combustion engine 3 from the ammonia storage tank 21.

### (Tank heater)

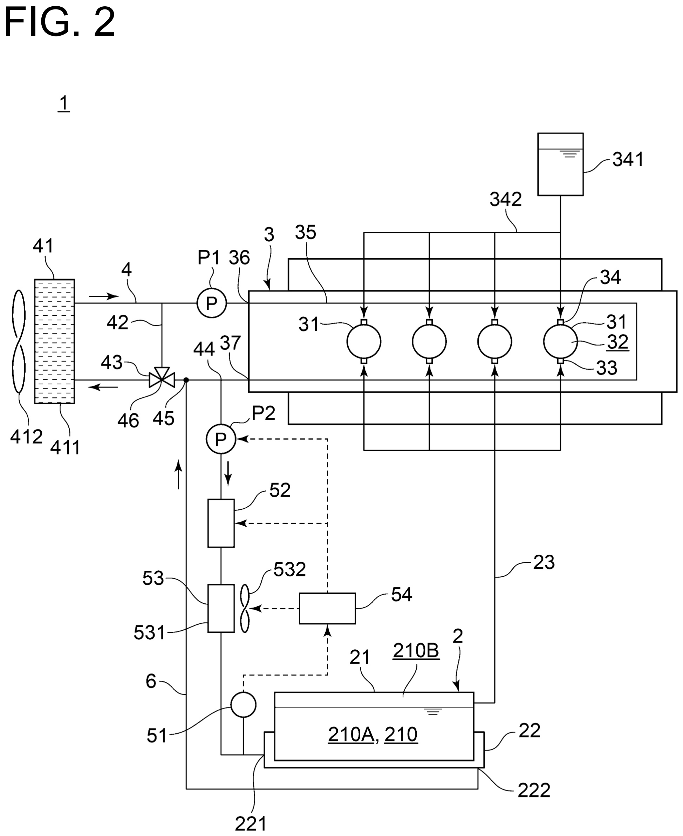

In some embodiments, as depicted in FIGs. 1 and 2, the above described tank heater 22 is configured to heat liquid ammonia stored in the ammonia storage tank 21 with exhaust heat discharged from the internal combustion engine 3 during operation of the above described internal combustion engine 3.

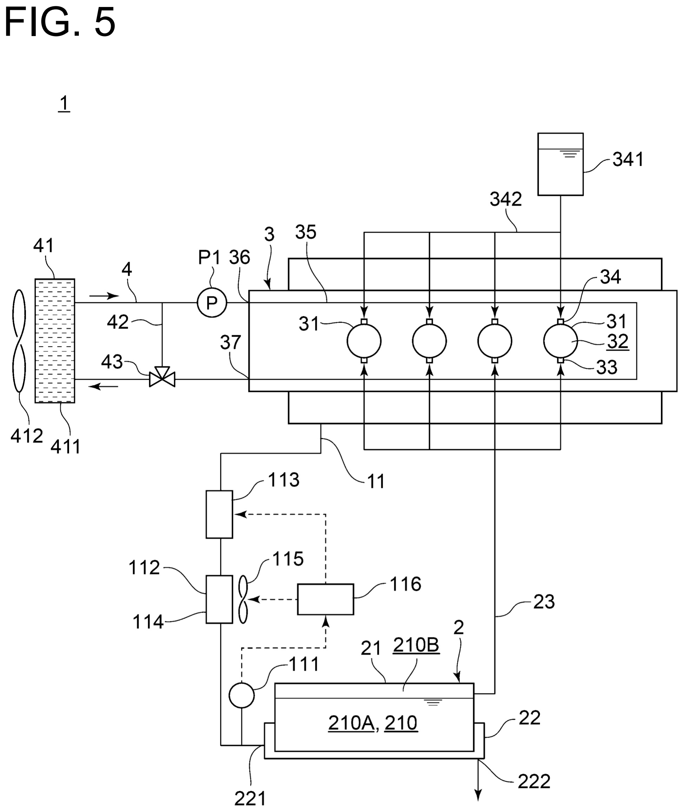

In the embodiment depicted in FIGs. 1 and 2, the above described tank heater 22 is configured such that a cooling liquid that has recovered thermal energy generated from combustion in the internal combustion engine 3 heats the liquid ammonia stored in the ammonia storage tank 21. The above described tank heater 22 may be configured such that exhaust gas generated from combustion in the internal combustion engine 3 heats the liquid ammonia stored in the ammonia storage tank 21 (see FIG. 5).

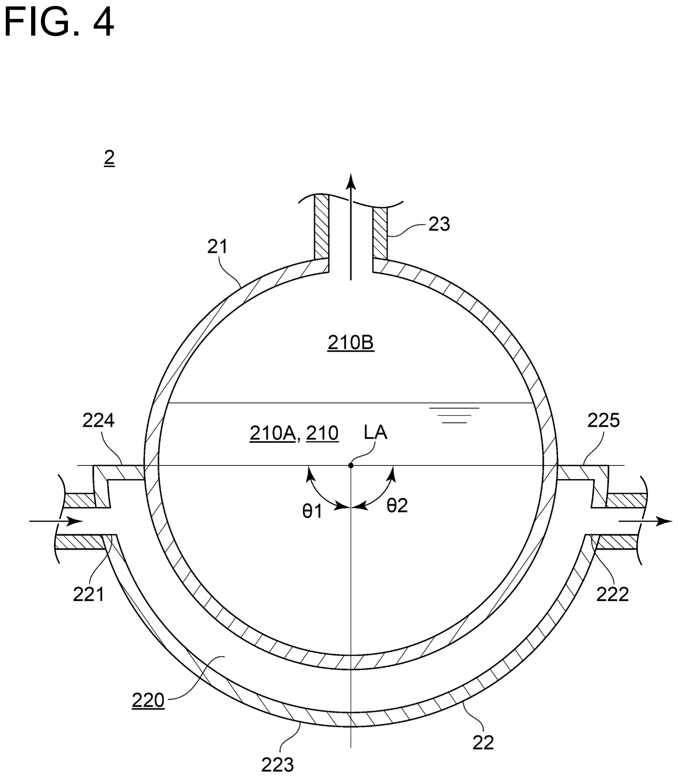

FIG. 4 is a schematic cross-sectional view of an ammonia storage tank 21 and a tank heater 22 of an ammonia gas supply system 2 according to an embodiment of the present disclosure. In the embodiment depicted in FIG. 4, the ammonia storage tank 21 is formed to have a cylindrical shape having a longitudinal direction along the axis LA. FIG. 4 schematically shows a cross-sectional view taken along a direction orthogonal to the axis LA of the ammonia storage tank 21 and the tank heater 22.

In FIG. 4, a storage part 220 for storing a heating medium that is a thermal medium for heating the liquid ammonia stored in the ammonia storage tank 21 is formed inside the tank heater 22. An introduction port 221 for introducing the heating medium from outside the tank heater 22 to the storage part 220 and a discharge port 222 for discharging the heating medium outside the tank heater 22 from the storage part 220 are formed on the tank heater 22.

In the embodiment depicted in FIGs. 1 and 2, the heating medium is a cooling liquid whose temperature has become relatively high due to thermal energy generated from combustion in the internal combustion engine 3, and the cooling liquid is stored in the storage part 220 of the tank heater 22. The cooling liquid (heating medium) stored in the storage part 220 and the liquid ammonia stored in the ammonia storage tank 21 exchange heat with one another. Specifically, thermal energy of the cooling liquid stored in the storage part 220 transfers to the liquid ammonia stored in the ammonia storage tank 21, and thereby the liquid ammonia is heated.

In the embodiment depicted in FIG. 4, the tank heater 22 includes a lower-part covering part 223 covering the lower part of the ammonia storage tank 21 and facing the outer surface of the ammonia storage tank 21 via a gap and a pair of closing parts 224, 225 that close the gap. The above described storage part 220 is formed by the outer surface of the ammonia storage tank 21, the inner surface of the lower-part covering part 223, and the inner surfaces of the pair of closing parts 224, 225. In the embodiment depicted in FIG. 4, the above described introduction port 221 and the discharge port 222 are formed on the lower-part covering part 223.

The lower-part covering part 223 may be, as depicted in FIG. 4, formed to have an arc shape whose cross section along a direction orthogonal to the axis LA is concaved downward. In this case, of the pair of closing parts 224, 225, the closing part 224 extends along the horizontal direction from the first end of the lower-part covering part 223, and is connected to the outer surface of the ammonia storage tank 21. Of the pair of closing parts 224, 225, the closing part 225 extends along the horizontal direction from the second end of the lower-part covering part 223, and is connected to the outer surface of the ammonia storage tank 21. In a cross section taken along a direction orthogonal to the axis LA, the first end and the second end of the lower-part covering part 223 preferably form circumferential direction angles θ1, θ2 of 90 degrees or more, respectively,
from the vertically downward direction centered at the axis LA. It is sufficient if the tank heater 22 is capable of heating liquid ammonia stored in the ammonia storage tank 21 with a heating medium, and the shape of the tank heater 22 is not limited to the shape depicted in FIG. 4.

With the above configuration, exhaust heat discharged from the internal combustion engine 3 is utilized as a heat source for heating liquid ammonia, and thus it is no longer necessary to separately provide a heat source for heating liquid ammonia, or it is possible to reduce the size of a separately provided heat source. Therefore, it is possible to suppress complexity of the structure of the ammonia gas supply system 2.

In some embodiments, the above described ammonia gas supply system 2 further includes, as depicted in FIGs. 1 and 2, a cooling liquid circulation line 4, a circulation line side pump P1, a cooling device 41, and a cooling liquid introduction line 5.

The internal combustion engine 3 includes a cooling liquid flow passage 35 for allowing a cooling liquid to flow through, formed inside the internal combustion engine 3, a cooling liquid introduction port 36 for introducing the cooling liquid from outside the internal combustion engine 3 into the cooling liquid flow passage 35, and a cooling liquid discharge port 37 for discharging the cooling liquid outside the internal combustion engine 3 from the cooling liquid flow passage 35. The cooling liquid flow passage 35 may include, for instance, a part which envelops at least a part of the outer circumference of the combustion chamber 32 to cool the combustion chamber 32 of each of the plurality of cylinders 31.

### (Cooling liquid circulation line, circulation line side pump)

The cooling liquid circulation line 4 is a line (supply system) for circulating the cooling liquid for cooling the internal combustion engine 3. The cooling liquid circulation line 4 is for forming a flow passage for allowing the cooling liquid to flow through, and is formed of a pipe, for example. The cooling liquid circulation line 4 has a first end (upstream end) connected to the cooling liquid discharge port 37 and a second end (downstream end) connected to the cooling liquid introduction port 36. The circulation line side pump P1 is disposed in the cooling liquid circulation line 4 and is configured to increase the pressure of the cooling liquid flowing through the cooling liquid circulation line 4. The circulation line side pump P1 extracts the cooling liquid from the cooling liquid flow passage 35 to the cooling liquid circulation line 4 via the cooling liquid discharge port 37, and the cooling liquid is sent to the downstream side of the cooling liquid circulation line 4.

### (Cooling device)

The cooling device 41 is a device for cooling the cooling liquid disposed in the cooling liquid circulation line 4. The cooling device 41 includes a radiator 411 disposed in the cooling liquid circulation line 4 and a fan 412 for air cooling the radiator 411. The cooling liquid whose temperature has increased after recovering thermal energy generated from combustion in the internal combustion engine 3 is sent to the cooling liquid circulation line 4 by the circulation line side pump P1, and is cooled by the cooling device 41 including the radiator 411. The cooling liquid cooled by the cooling device 41 is supplied to the cooling liquid flow passage 35 via the cooling liquid circulation line 4 and the cooling liquid introduction port 36. The cooling liquid that circulates through the cooling liquid circulation line 4 may be water or an antifreeze liquid like such as glycol solution.

### (Cooling liquid introduction line)

The cooling liquid introduction line 5 is a line (supply system) for extracting a part of the cooling liquid flowing from the internal combustion engine 3 toward the cooling device 41 from the cooling liquid circulation line 4 and guiding the same to the tank heater 22. The cooling liquid introduction line 5 is for forming a flow passage for allowing the cooling liquid to flow through, and is formed of a pipe, for example. The cooling liquid introduction line 5 has a first end (upstream end) connected to a connection part 44 formed between the first end of the cooling liquid circulation line 4 and the cooling device 41 and a second end (downstream end) connected to the introduction port 221 of the tank heater 22.

With the above configuration, it is possible to guide the cooling liquid having recovered thermal energy generated from combustion in the internal combustion engine 3 to the tank heater 22 via the cooling liquid introduction line 5. Furthermore, it is possible to heat the liquid ammonia stored the ammonia storage tank 21 with the cooling liquid introduced into the tank heater 22. In this case, the cooling liquid circulation line 4, the circulation line side pump P1 and the cooling device 41 are devices that are conventionally required to circulate the cooling liquid, and by utilizing the devices to introduce the cooling liquid to the tank heater 22, it is possible to suppress complexity of the structure of the ammonia gas supply system 2.

### (Cooling liquid side pump)

In some embodiments, the above described ammonia gas supply system 2 further includes, as depicted in FIGs. 1 and 2, a cooling liquid side pump P2 disposed in the above described cooling liquid introduction line 5 and configured to increase the pressure of the cooling liquid flowing through the cooling liquid introduction line 5. The cooling liquid side pump P2 extracts the cooling liquid from the cooling liquid circulation line 4 to the cooling liquid introduction line 5, and the cooling liquid is sent to the downstream side (the second end side) of the cooling liquid introduction line 5.

With the above configuration, the flow rate of the cooling liquid circulating through the cooling liquid circulation line 4 is a constant flow rate corresponding to the rating of the internal combustion engine 3 or a variable flow rate corresponding to the operation state of the internal combustion engine 3 (the load or rotation speed of the internal combustion engine 3). By providing the cooling liquid side pump P2 in the cooling liquid introduction line 5, it is possible to stably supply the cooling liquid to the tank heater 22 via the cooling liquid introduction line 5 regardless of the operation state of the internal combustion engine 3. By supplying the cooling liquid to the tank heater 22 stably, it is possible to generate an ammonia gas from the liquid ammonia stably inside the ammonia storage tank 21.

In some embodiments, the above described ammonia gas supply system 2 further includes, as depicted in FIGs. 1 and 2, a cooling liquid return line 6. The cooling liquid return line 6 is a line (supply system) for returning the cooling liquid from the tank heater 22 to the cooling liquid circulation line 4. The cooling liquid return line 6 is for forming a flow passage for allowing the cooling liquid to flow through, and is formed of a pipe, for example. The pipe forming each of the cooling liquid introduction line 5 and the cooling liquid return line 6 may have a pipe diameter smaller than that of the pipe forming the cooling liquid circulation line 4.

The cooling liquid return line 6 has a first end (upstream end) connected to the discharge port 222 of the tank heater 22, and a second end (downstream end) connected to the connection part 45 positioned between the cooling device 41 and the above described connection part 44 of the cooling liquid circulation line 4 to which the cooling liquid introduction line 5 is connected.

With the above configuration, it is possible to return the cooling liquid from the tank heater 22 to the cooling liquid circulation line 4 via the cooling liquid return line 6. In this case, by utilizing the cooling liquid circulation line 4, the circulation line side pump P1 and the cooling device 41 for circulation of the cooling liquid that passes through the cooling liquid introduction line 5, the tank heater 22, and the cooling liquid return line 6, it is possible to suppress complexity of the structure of the ammonia gas supply system 2.

### (Cooling liquid temperature increasing device)

In some embodiments, the above described ammonia gas supply system 2 further includes, as depicted in FIG. 2, a cooling liquid temperature acquisition device 51 and a cooling liquid temperature increasing device 52. The cooling liquid temperature acquisition device 51 is configured to obtain the temperature of one of the cooling liquid existing inside the tank heater 22 or the cooling liquid flowing through the cooling liquid introduction line 5. The cooling liquid temperature acquisition device 51 may be a temperature sensor disposed inside the tank heater 22 or a temperature sensor disposed in the cooling liquid introduction line 5 (see FIG. 2).

The cooling liquid temperature increasing device 52 is disposed at the upstream side of the temperature acquisition position in the cooling liquid introduction line 5 where the temperature is obtained by the cooling liquid temperature acquisition device 51. The cooling liquid temperature increasing device 52 is configured to increase the temperature of the cooling liquid introduced to the tank heater 22 via the cooling liquid introduction line 5 so that the temperature of the cooling liquid obtained by the cooling liquid temperature acquisition device 51 becomes a predetermined value (lower threshold value) or higher.

The cooling liquid temperature increasing device 52 may include, for instance, an electric heater (heating device) for heating cooling liquid that flows through the cooling liquid introduction line 5. The lower threshold value should be preferably not lower than 0°C and not higher than 30°C, and more preferably, not lower than 20°C and not higher than 30°C. The cooling liquid temperature increasing device 52 may be configured to operate when the temperature of the cooling liquid obtained by the cooling liquid temperature acquisition device 51 is lower than a predetermined value (lower threshold value), and stop operation when the temperature of the cooling liquid obtained by the cooling liquid temperature acquisition device 51 becomes a predetermined value (lower threshold value) or higher.

With the above configuration, for instance, in a case where thermal energy that the cooling liquid can recover from the internal combustion engine 3 (exhaust heat) is small, such as at the time of starting the internal combustion engine 3, the temperature of the cooling liquid introduced to the tank heater 22 may become low. With the cooling liquid temperature increasing device 52 configured to increase the temperature of the cooling liquid so that the temperature of the cooling liquid obtained by the cooling liquid temperature acquisition device 51 becomes a predetermined value (lower threshold value) or higher, it is possible to suppress temperature decrease of the cooling liquid introduced to the tank heater 22, and thus it is possible to stably heat the liquid ammonia stored the ammonia storage tank 21 with the tank heater 22.

While the internal combustion engine 3 is configured to combust ammonia gas supplied from the gas fuel supply device 33 during normal operation where the internal combustion engine 3 is stably operating, the internal combustion engine 3 may be configured to combust a liquid fuel supplied from the liquid fuel supply device 34 at the time of starting the internal combustion engine 3.

### (Cooling liquid temperature decreasing device)

In some embodiments, the above described ammonia gas supply system 2 includes, as depicted in FIG. 2, the above described cooling liquid temperature acquisition device 51 and a cooling liquid temperature decreasing device 53. The cooling liquid temperature decreasing device 53 is disposed at the upstream side of the temperature acquisition position in the cooling liquid introduction line 5 where the temperature is obtained by the cooling liquid temperature acquisition device 51. The cooling liquid temperature decreasing device 53 is configured to decrease the temperature of the cooling liquid introduced to the tank heater 22 via the cooling liquid introduction line 5 so that the temperature of the cooling liquid obtained by the cooling liquid temperature acquisition device 51 becomes a predetermined value (higher threshold value) or lower.

The cooling liquid temperature decreasing device 53 may include a radiator 531 disposed in the cooling liquid introduction line 5 and a fan 532 for air cooling the radiator 531. The lower threshold value should be preferably not lower than 35°C and not higher than 50°C, and more preferably, not lower than 35°C and not higher than 40°C. While the temperature of the cooling liquid introduced to the tank heater 22 should be preferably around 40°C, the temperature of the cooling liquid flowing toward the cooling device 41 from the internal combustion engine 3 through the cooling liquid circulation line 4 may sometimes become 80°C to 90°C during normal operation of the internal combustion engine 3. The cooling liquid temperature decreasing device 53 may be configured to operate when the temperature of the cooling liquid obtained by the cooling liquid temperature acquisition device 51 is higher than a predetermined value (upper threshold value), and stop operation when the temperature of the cooling liquid obtained by the cooling liquid temperature acquisition device 51 becomes a predetermined value (upper threshold value) or lower.

With the above configuration, in a case where the load of the internal combustion engine 3 is high and thermal energy that the cooling liquid can recover from the internal combustion engine 3 (exhaust heat) is high, the temperature of the cooling liquid introduced to the tank heater 22 may become high. If the temperature of the cooling liquid introduced to the tank heater 22 becomes too high, an excess amount of ammonia gas may be produced inside the ammonia storage tank 21, and the internal pressure of the ammonia storage tank 21 may become too high. With the cooling liquid temperature decreasing device 53 configured to decrease the temperature of the cooling liquid so that the temperature of the cooling liquid obtained by the cooling liquid temperature acquisition device 51 becomes a predetermined value (higher threshold value) or lower, it is possible to suppress temperature increase of the cooling liquid introduced to the tank heater 22, and thus it is possible to stably heat the liquid ammonia stored the ammonia storage tank 21 with the tank heater 22. The cooling liquid temperature decreasing device 53 of the present disclosure is applicable to the ammonia gas supply system 2 including the above described cooling liquid temperature increasing device 52, and also applicable to the ammonia gas supply system 2 not including the cooling liquid temperature increasing device 52.

In some embodiments, the above described cooling liquid side pump P2 is configured such that the output is variable. The above described ammonia gas supply system 2 includes the above described cooling liquid temperature acquisition device 51 and a control device 54. The control device 54 is configured to control the output of the cooling liquid side pump P2 so that the temperature of the cooling liquid obtained by the cooling liquid temperature acquisition device 51 becomes a predetermined value (higher threshold value) or lower.

The control device (controller) 54 is an electronic control unit for controlling the temperature of the cooling liquid introduced to the tank heater 22, and may be configured as a microcomputer including a non-depicted CPU (processor), a memory like ROM or RAM, a storage device such as an external storage device, an I/O interface, a communication interface, and the like. Furthermore, the CPU operates (e.g., computation of data) in accordance with program commands loaded to a main storage device of the memory, and thereby the following functions are implemented.

The temperature of the cooling liquid obtained by the cooling liquid temperature acquisition device 51 is sent to the control device 54 from the cooling liquid temperature acquisition device 51. The control device 54 is configured to be capable of sending an operation command or an operation stop command to the cooling liquid side pump P2. The cooling liquid side pump P2 is controlled by a command (command signal) sent from the control device 54, and is configured to operate or stop in response to the command. Furthermore, the cooling liquid side pump P2 is configured to change the output in response to an output command sent from the control device 54.

The control device 54 may be configured to command a predetermined output (first output) to the cooling liquid side pump P2 when the temperature of the cooling liquid obtained by the cooling liquid temperature acquisition device 51 becomes a predetermined value (higher threshold value) or lower. Furthermore, the control device 54 may be configured to command a predetermined output (second output) that is lower than the first output to the cooling liquid side pump P2 when the temperature of the cooling liquid obtained by the cooling liquid temperature acquisition device 51 exceeds a predetermined value (higher threshold value). Accordingly, it is possible to suppress the flow rate of the cooling liquid introduced to the tank heater 22 when the temperature of the cooling liquid obtained by the cooling liquid temperature acquisition device 51 exceeds a predetermined value (the upper threshold value).

With the above configuration, the output of the cooling liquid side pump P2 is controlled and the flow rate of the cooling liquid introduced to the tank heater 22 is suppressed, and the temperature of the cooling liquid obtained by the cooling liquid temperature acquisition device 51 becomes a predetermined value (the higher threshold value) or lower, whereby it is possible to suppress temperature increase of the cooling liquid introduced to the tank heater 22, and thus it is possible to stably heat the liquid ammonia stored the ammonia storage tank 21.

The control device 54 may be configured to be capable of sending an operation or an operation stop command to the above described cooling liquid temperature increasing device 52 or the cooling liquid temperature decreasing device 53. The cooling liquid temperature increasing device 52 or the cooling liquid temperature decreasing device 53 are controlled by a command (command signal) sent from the control device 54, and may be configured to operate or stop in response to the command. The control device 54 of the present disclosure is applicable to the ammonia gas supply system 2 including the above described cooling liquid temperature increasing device 52 or the above described cooling liquid temperature decreasing device 53, and also applicable to the ammonia gas supply system 2 not including the cooling liquid temperature increasing device 52 or the above described cooling liquid temperature decreasing device 53.

### (Exhaust gas introduction line)

FIG. 5 is a diagram showing a modified example of the ammonia gas supply system 2 depicted in FIG. 2. As depicted in FIG. 5, the ammonia gas supply system 2 according to some embodiments includes the above described ammonia storage tank 21, the above described tank heater 22, the above described ammonia gas introduction line 23, and an exhaust gas introduction line 11.

The exhaust gas introduction line 11 is a line (supply system) for introducing the exhaust gas discharged from the internal combustion engine 3 to the tank heater 22. The exhaust gas introduction line 11 is for forming a flow passage for allowing the exhaust gas to flow through, and is formed of a pipe, for instance. The exhaust gas introduction line 11 has a first end (upstream end) connected to the internal combustion engine 3 and a second end (downstream end) connected to the introduction port 221 of the tank heater 22. The exhaust gas discharged from the internal combustion engine 3 is introduced to the tank heater 22 via the exhaust gas introduction line 11 and stored in the storage part 220. In the present embodiment, the exhaust gas serves as the heating medium for heating the liquid ammonia.

With the above configuration, it is possible to guide the exhaust gas generated from combustion in the internal combustion engine 3 to the tank heater 22. Furthermore, it is possible to heat the liquid ammonia stored in the ammonia storage tank 21 with the exhaust gas introduced to the tank heater 22. In this case, the exhaust gas introduction line 11 is a device that is conventionally required to discharge exhaust gas, and by utilizing the device for introduction of the exhaust gas to the tank heater 22, it is possible to suppress complexity of the structure of the ammonia gas supply system 2.

### (Exhaust gas temperature decreasing device)

In some embodiments, the above described ammonia gas supply system 2 further includes, as depicted in FIG. 5, an exhaust gas temperature acquisition device 111 and an exhaust gas temperature decreasing device 112. The exhaust gas temperature acquisition device 111 is configured to obtain the temperature of one of the exhaust gas existing inside the tank heater 22 or the exhaust gas flowing through the exhaust gas introduction line 11. The exhaust gas temperature acquisition device 111 may be a temperature sensor disposed inside the tank heater 22 or a temperature sensor disposed in the exhaust gas introduction line 11 (see FIG. 5).

The exhaust gas temperature decreasing device 112 is disposed in the exhaust gas introduction line 11 at the upstream side of the temperature acquisition position by the exhaust gas temperature acquisition device 111. The exhaust gas temperature decreasing device 112 is configured to decrease the temperature of the exhaust gas introduced to the tank heater 22 via the exhaust gas introduction line 11 so that the temperature of the exhaust gas obtained by the exhaust gas temperature acquisition device 111 becomes a predetermined value (upper threshold value) or lower.

The exhaust gas temperature decreasing device 112 may include a radiator 114 disposed in the exhaust gas introduction line 11 and a fan 115 for air cooling the radiator 114. The lower threshold value should be preferably not lower than 35°C and not higher than 50°C, and more preferably, not lower than 35°C and not higher than 40°C. The exhaust gas temperature decreasing device 112 may be configured to operate when the temperature of the exhaust gas obtained by the exhaust gas temperature acquisition device 111 is higher than a predetermined value (upper threshold value), and stop operation when the temperature of the exhaust gas obtained by the exhaust gas temperature acquisition device 111 becomes a predetermined value (the upper threshold value) or lower.

With the above configuration, the exhaust gas discharged from the internal combustion engine 3 recovers more thermal energy (exhaust heat) than the cooling liquid, and thus the temperature of the exhaust gas introduced into the tank heater 22 may become high. If the temperature of the exhaust gas introduced to the tank heater 22 becomes too high, an excess amount of ammonia gas may be produced inside the ammonia storage tank 21, and the internal pressure of the ammonia storage tank 21 may become too high. With the exhaust gas temperature decreasing device 112 configured to decrease the temperature of the exhaust gas obtained by the exhaust gas temperature acquisition device 111 to a predetermined value or lower, it is possible to suppress temperature increase of the exhaust gas introduced to the tank heater 22, and thus it is possible to stably heat the liquid ammonia stored in the ammonia storage tank 21 with the tank heater 22.

### (Exhaust gas temperature increasing device)

In some embodiments, the above described ammonia gas supply system 2 further includes, as depicted in FIG. 5, the above described exhaust gas temperature acquisition device 111 and an exhaust gas temperature increasing device 113. The exhaust gas temperature increasing device 113 is disposed in the exhaust gas introduction line 11 at the upstream side of the temperature acquisition position by the exhaust gas temperature acquisition device 111. The exhaust gas temperature increasing device 113 is configured to increase the temperature of the exhaust gas introduced to the tank heater 22 via the exhaust gas introduction line 11 so that the temperature of the exhaust gas obtained by the exhaust gas temperature acquisition device 111 becomes a predetermined value (lower threshold value) or higher.

The exhaust gas temperature increasing device 113 may include, for instance, an electric heater (heating device) for heating exhaust gas that flows through the exhaust gas introduction line 11. The lower threshold value should be preferably not lower than 0°C and not higher than 30°C, and more preferably, not lower than 20°C and not higher than 30°C. The exhaust gas temperature increasing device 113 may be configured to operate when the temperature of the exhaust gas obtained by the exhaust gas temperature acquisition device 111 is lower than a predetermined value (lower threshold value), and stop operation when the temperature of the exhaust gas obtained by the exhaust gas temperature acquisition device 111 becomes a predetermined value (the lower threshold value) or higher.

With the above configuration, in a case where thermal energy that the exhaust gas can recover from the internal combustion engine 3 (exhaust heat) is small, such as at the time of starting the internal combustion engine 3, the temperature of the exhaust gas guided to the tank heater 22 may be low. With the exhaust gas temperature increasing device 113 configured to increase the temperature of the exhaust gas so that the temperature of the exhaust gas obtained by the exhaust gas temperature acquisition device 111 becomes a predetermined value or higher, it is possible to suppress temperature decrease of the exhaust gas introduced to the tank heater 22, and thus it is possible to stably heat the liquid ammonia stored in the ammonia storage tank 21 with the tank heater 22. In the embodiment depicted in FIG. 5, the ammonia gas supply system 2 includes the exhaust gas temperature decreasing device 112 and the exhaust gas temperature increasing device 113. Nevertheless, the ammonia gas supply system 2 may be configured to include one of the exhaust gas temperature decreasing device 112 or the exhaust gas temperature increasing device 113.

In some embodiments, the above described ammonia gas supply system 2 may include a control device 116 configured to be capable of sending an operation command and an operation stop command to at least one of the exhaust gas temperature decreasing device 112 or the exhaust gas temperature increasing device 113. The temperature of the exhaust gas obtained by the exhaust gas temperature acquisition device 111 is sent to the control device 116 from the exhaust gas temperature acquisition device 111. The exhaust gas temperature decreasing device 112 or the exhaust gas temperature increasing device 113 may be configured to be controlled by a command (command signal) sent from the control device 116, and to operate or stop in response to the command.

The control device 116 controls the temperature of a different target, but has the same configuration as the above described control device 54. The control device (controller) 116 is an electronic control unit for controlling the temperature of the exhaust gas introduced to the tank heater 22, and may be configured as a microcomputer including a non-depicted CPU (processor), a memory like ROM or RAM, a storage device such as an external storage device, an I/O interface, a communication interface, and the like. Furthermore, the CPU operates (e.g., computation of data) in accordance with program commands loaded to a main storage device of the memory, and thereby the following functions are implemented.

### (Circulation system of heating medium)

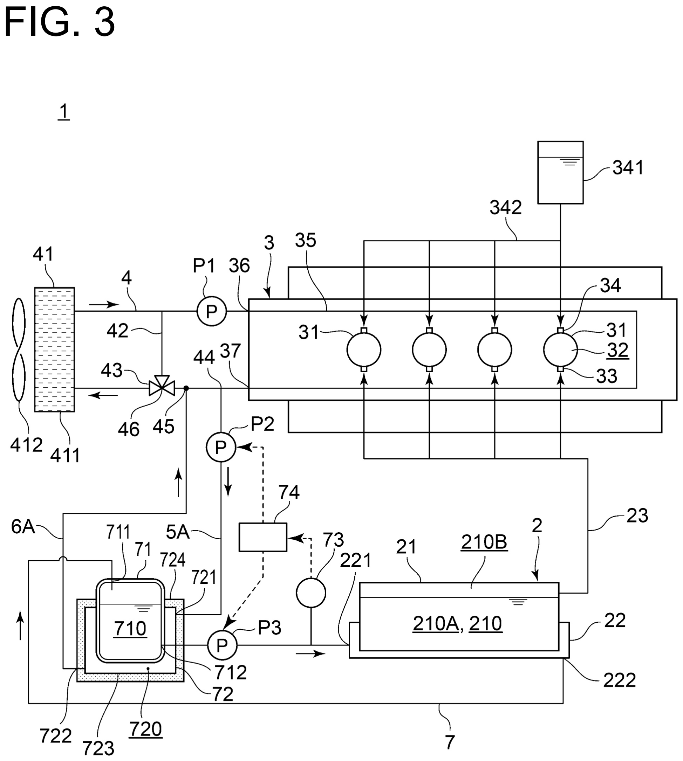

As depicted in FIG. 3, the ammonia gas supply system 2 according to some embodiments includes the above described ammonia storage tank 21, the above described tank heater 22, the above described ammonia gas introduction line 23, a heating medium circulation line 7, a heating medium side pump P3, a heating medium storage tank 71, and a heat retention device 72.

### (Heating medium circulation line, heating medium side pump)

The heating medium circulation line 7 is a line (supply system) for circulating the heating medium for heating the ammonia storage tank 21. The heating medium circulation line 7 is for forming a flow passage for allowing the heating medium to flow through, and is formed of a pipe, for example. The heating medium circulation line 7 has a first end (downstream end) connected to the introduction port 221 of the tank heater 22 and a second end (upstream end) connected to the discharge port 222 of the tank heater 22. The heating medium side pump P3 is disposed in the heating medium circulation line 7 and is configured to increase the pressure of the heating medium flowing through the heating medium circulation line 7. The heating medium side pump P3 extracts the heating medium from the tank heater 22 to the heating medium circulation line 7 via the discharge port 222, and the heating medium is sent to the downstream side of the heating medium circulation line 7.

### (Heating medium storage tank, heat retention device)

The heating medium storage tank 71 is disposed in the heating medium circulation line 7 and is configured to store the heating medium. The heat retention device 72 is configured to retain heat of the heating medium stored in the heating medium storage tank 71 with exhaust heat discharged from the internal combustion engine 3 during operation of the internal combustion engine 3.

As depicted in FIG. 3, a storage part 710 for storing the heating medium is formed inside the heating medium storage tank 71. An introduction port 711 for introducing the heating medium from the upstream side of the heating medium storage tank 71 in the heating medium circulation line 7 to the storage part 710 and a discharge port 712 for discharging the heating medium to the downstream side of the heating medium storage tank 71 in the heating medium circulation line 7 from the storage part 710 are formed on the heating medium storage tank 71.

The heating medium that circulates through the heating medium circulation line 7 is preferably a heating medium in a liquid state which has a high density than a heating medium in a gas state. The heating medium that circulates through the heating medium circulation line 7 may be water, an antifreeze liquid such as glycol solution, or oil like lubricant oil.

As depicted in FIG. 3, the heat retention device 72 has a storage part 720 for storing the heat-retention heating medium for retaining heat of the heating medium storage tank 71 formed between the heat retention device 72 and the heating medium storage tank 71. The heat retention device 72 includes a heat retention device body 723 forming a storage part 720 between the heat retention device 72 and the heating medium storage tank 71 and a heat insulator 724 which covers the outer surface of the heat retention device body 723. An introduction port 721 for introducing the heat-retention heating medium from outside the heat retention device 72 to the storage part 720 and a discharge port 722 for discharging the heat-retention heating medium outside the heat retention device 72 from the storage part 720 are formed on the heat retention device body 723.

In the embodiment depicted in FIG. 3, the heat-retention heating medium is a cooling liquid whose temperature has become relatively high due to thermal energy generated from combustion in the internal combustion engine 3, and the cooling liquid is stored in the storage part 720 of the heat retention device 72. The cooling liquid (heat-retention heating medium) stored in the storage part 720 and the heating medium stored in the heating medium storage tank 71 exchange heat with one another. Specifically, thermal energy of the cooling liquid stored in the storage part 720 transfers to the heating medium stored in the heating medium storage tank 71, and thereby the heating medium is heated (heat is retained). Accordingly, it is possible to maintain the temperature of the heating medium that circulates through the heating medium circulation line 7 at a temperature appropriate for introduction to the tank heater 22 (e.g., approximately 40°C).

With the above configuration, by retaining heat of the heating medium stored in the heating medium storage tank 71 with the heat retention device 72, it is possible to suppress temperature decrease of the heating medium introduced into the tank heater 22 via the heating medium circulation line 7. Accordingly, for instance, even in a case where thermal energy that the cooling liquid can recover from the internal combustion engine 3 (exhaust heat) is small, such as at the time of starting the internal combustion engine 3, it is possible to heat the liquid ammonia stored in the ammonia storage tank 21 with the tank heater 22. Thus, with the above configuration, it is possible to produce ammonia gas by heating liquid ammonia with the tank heater 22 at the time of starting the internal combustion engine 3, and thus it is possible to reduce the time from start of the internal combustion engine 3 until when it is possible to supply ammonia to the internal combustion engine 3.

### (Cooling liquid introduction line)

In some embodiments, the above described ammonia gas supply system 2 further includes, as depicted in FIG. 3, the above described cooling liquid circulation line 4, the above described circulation line side pump P1, the above described cooling device 41, and a cooling liquid introduction line 5A.

The cooling liquid introduction line 5A is a line (supply system) for extracting a part of the cooling liquid flowing from the internal combustion engine 3 toward the cooling device 41 from the cooling liquid circulation line 4 and guiding the same to the heat retention device 72. The cooling liquid introduction line 5A is for forming a flow passage for allowing the cooling liquid to flow through, and is formed of a pipe, for example. The cooling liquid introduction line 5A has a first end (upstream end) connected to a connection part 44 formed between the first end of the cooling liquid circulation line 4 and the cooling device 41 and a second end (downstream end) connected to the introduction port 721 of the heat retention device 72.

With the above configuration, it is possible to guide the cooling liquid having recovered thermal energy generated from combustion in the internal combustion engine 3 to the heat retention device 72 via the cooling liquid introduction line 5A. Furthermore, it is possible to heat the heating medium stored in the heating medium storage tank 71 with the cooling liquid introduced into the heat retention device 72. In this case, as exhaust heat discharged from the internal combustion engine 3 is utilized as a heat source for heating liquid ammonia (heat source for retaining heat of the heating medium), it is no longer necessary to separately provide a heat source for heating liquid ammonia, or it is possible to reduce the size of a separately provided heat source. Therefore, it is possible to suppress complexity of the structure of the ammonia gas supply system 2. Furthermore, the cooling liquid circulation line 4, the circulation line side pump P1 and the cooling device 41 are devices that are conventionally required to circulate the cooling liquid, and by utilizing the devices also to introduce the cooling liquid to the heat retention device 72, it is possible to suppress complexity of the structure of the ammonia gas supply system.

In an embodiment depicted in FIG. 3, the above described ammonia gas supply system 2 further includes, a cooling liquid side pump P2 disposed in the above described cooling liquid introduction line 5A and configured to increase the pressure of the cooling liquid flowing through the cooling liquid introduction line 5A and a cooling liquid return line 6A.

The cooling liquid return line 6A is a line (supply system) for returning the cooling liquid from the heat retention device 72 to the cooling liquid circulation line 4. The cooling liquid return line 6A is for forming a flow passage for allowing the cooling liquid to flow through, and is formed of a pipe, for example. The pipe forming each of the cooling liquid introduction line 5A and the cooling liquid return line 6A may have a pipe diameter smaller than that of the pipe forming the cooling liquid circulation line 4. The cooling liquid return line 6A has a first end (upstream end) connected to the discharge port 722 of the heat retention device 72, and a second end (downstream end) connected to the connection part 45 positioned between the cooling device 41 and the above described connection part 44 of the cooling liquid circulation line 4 to which the cooling liquid introduction line 5A is connected.

With the above configuration, it is possible to return the cooling liquid from the heat retention device 72 to the cooling liquid circulation line 4 through the cooling liquid return line 6A. In this case, by utilizing the cooling liquid circulation line 4, the circulation line side pump P1 and the cooling device 41 for circulation of the cooling liquid that passes through the cooling liquid introduction line 5A, the heat retention device 72, and the cooling liquid return line 6A, it is possible to suppress complexity of the structure of the ammonia gas supply system 2.

In some embodiments, the above described ammonia gas supply system 2 further includes, as depicted in FIG. 3, a heating medium temperature acquisition device 73 and a heating medium temperature adjustment device 74. The heating medium temperature acquisition device 73 is configured to obtain the temperature of one of the heating medium existing inside the tank heater 22 or the heating medium flowing through the heating medium circulation line 7 from the heating medium storage tank 71 to the tank heater 22. The heating medium temperature acquisition device 73 may be a temperature sensor disposed inside the tank heater 22 or a temperature sensor disposed between the downstream end of the heating medium circulation line 7 and the discharge port 712 of the heating medium storage tank 71 (see FIG. 3).

In an embodiment depicted in FIG. 3, the above described heating medium side pump P3 is disposed at the upstream side of the temperature acquisition position by the heating medium temperature acquisition device 73 and at the downstream side of the discharge port 712 of the heating medium storage tank 71.

The heating medium temperature adjustment device 74 is configured to adjust the temperature of the heating medium introduced to the tank heater 22 via the heating medium circulation line 7 so that the temperature of the heating medium obtained by the heating medium temperature acquisition device 73 becomes a predetermined value (upper threshold value) or lower.

The heating medium temperature adjustment device (controller) 74 is an electronic control unit for controlling the temperature of the heating medium introduced to the tank heater 22, and may be configured as a microcomputer including a non-depicted CPU (processor), a memory like ROM or RAM, a storage device such as an external storage device, an I/O interface, a communication interface, and the like. Furthermore, the CPU operates (e.g., computation of data) in accordance with program commands loaded to a main storage device of the memory, and thereby the following functions are implemented.

The temperature T of the heating medium obtained by the heating medium temperature acquisition device 73 is sent to the heating medium temperature adjustment device 74 from the heating medium temperature acquisition device 73. Information related to the rotation speed N is sent to the heating medium temperature adjustment device 74 from the internal combustion engine 3. The heating medium temperature adjustment device 74 is configured to be capable of sending an operation command or an operation stop command to the cooling liquid side pump P2 or the heating medium side pump P3. The cooling liquid side pump P2 and the heating medium side pump P3 are controlled by a command (command signal) sent from the heating medium temperature adjustment device 74, and is configured to operate or stop in response to the command. Furthermore, the cooling liquid side pump P2 is configured to change the output in response to an output command sent from the control device 54.

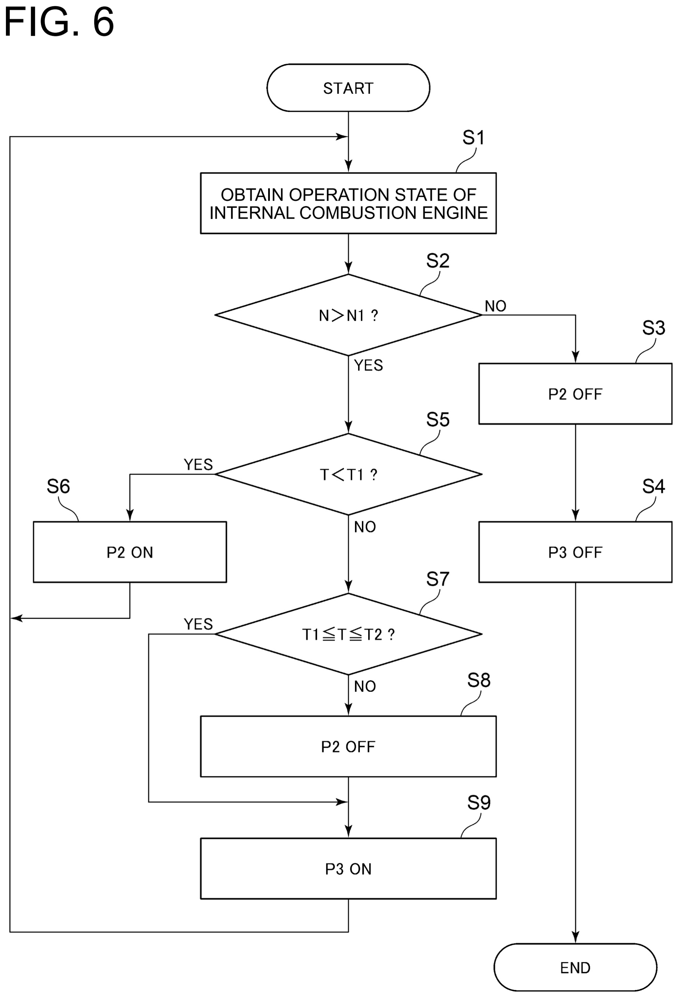

FIG. 6 is a flowchart showing an example of control in the ammonia gas supply system (control by the heating medium temperature adjustment device 74) depicted in FIG. 3. The heating medium temperature adjustment device 74 obtains information related to the operation state of the internal combustion engine 3 (e.g., rotation speed N of the internal combustion engine 3) (S1). If the rotation speed N of the internal combustion engine 3 obtained in the above step S1 is not greater than the setting rotation speed N1 that is set in advance ("No" in S2), the heating medium temperature adjustment device 74 stops the cooling liquid side pump P2 and the heating medium side pump P3 (S3, S4). In an embodiment, the setting rotation speed N1 is 200rpm.

If the rotation speed N of the internal combustion engine 3 obtained in the above step S1 is greater than the setting rotation speed N1 that is set in advance ("Yes" in S2), the heating medium temperature adjustment device 74 compares the temperature T of the heating medium obtained by the heating medium temperature acquisition device 73 to the lower threshold value T1 and the upper threshold value T2 (S5, S7). In an embodiment, the lower threshold value T1 is 35°C, and the upper threshold value T2 is 40°C.

If the temperature T of the heating medium is lower than the lower threshold value T1 ("Yes" in S5), the heating medium temperature adjustment device 74 drives the cooling liquid side pump P2 (S6). Furthermore, if the temperature T of the heating medium exceeds the upper threshold value ("No" in S5), the heating medium temperature adjustment device 74 stops the cooling liquid side pump P2 and drives the heating medium side pump P3 (S8, S9). If the temperature T of the heating medium falls within a range not lower than the lower threshold value T1 and not greater than the upper threshold value ("Yes" in S7), the heating medium temperature adjustment device 74 drives the heating medium side pump P3 without stopping the cooling liquid side pump P2 (S9).

With the above configuration, the temperature of the heating medium introduced to the tank heater 22 is suppressed by the heating medium temperature adjustment device 74 so that the temperature of the heating medium obtained by the heating medium temperature acquisition device 73 becomes a predetermined value (higher threshold value) or lower, whereby it is possible to suppress temperature increase of the heating medium introduced to the tank heater 22, and it is possible to stably heat the liquid ammonia stored in the ammonia storage tank 21 with the tank heater 22.

### (Exhaust gas introduction line)

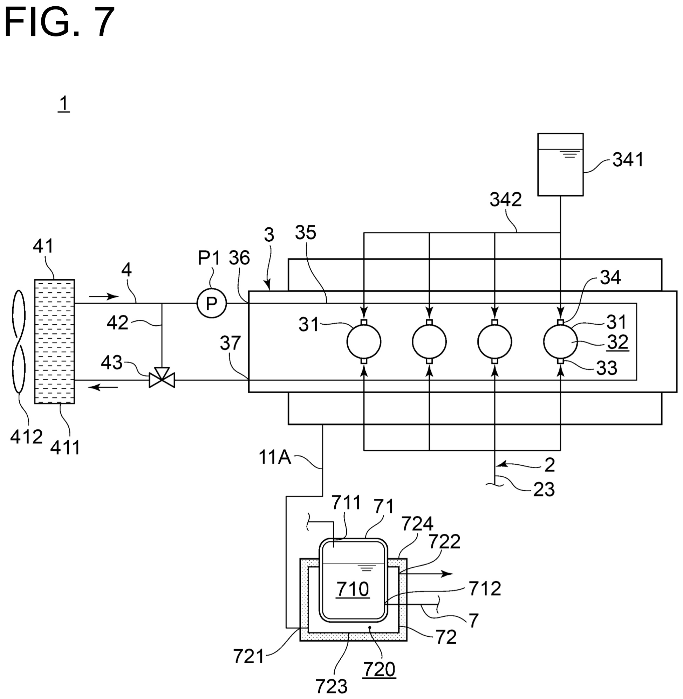

FIG. 7 is a diagram showing a modified example of the ammonia gas supply system depicted in FIG. 3. The ammonia gas supply system 2 according to some embodiments includes the above described ammonia storage tank 21, the above described tank heater 22, the above described ammonia gas introduction line 23, the above described heating medium circulation line 7, the above described heating medium side pump P3, the above described heating medium storage tank 71, and the above described heat retention device 72 (see FIG. 3). In the embodiment depicted in FIG. 7, the ammonia gas supply system 2 further includes an exhaust gas introduction line 11A.

The exhaust gas introduction line 11A is a line (supply system) for introducing the exhaust gas discharged from the internal combustion engine 3 to the heat retention device 72. The exhaust gas introduction line 11A is for forming a flow passage for allowing the exhaust gas to flow through, and is formed of a pipe, for instance. The exhaust gas introduction line 11A has a first end (upstream end) connected to the internal combustion engine 3 and a second end (downstream end) connected to the introduction port 721 of the heat retention device 72. The exhaust gas discharged from the internal combustion engine 3 is introduced to the heat retention device 72 via the exhaust gas introduction line 11A and stored in the storage part 720. In the present embodiment, the exhaust gas serves as the heating medium for retaining heat.

With the above configuration, it is possible to guide the exhaust gas generated from combustion in the internal combustion engine 3 to the heat retention device 72. Furthermore, it is possible to retain heat of the heating medium stored in the heating medium storage tank 71 with the exhaust gas introduced into the heat retention device 72. In this case, the exhaust gas introduction line 11A is a device that is conventionally required to discharge exhaust gas, and by utilizing the device to introduce the exhaust gas to the heat retention device 72, it is possible to suppress complexity of the structure of the ammonia gas supply system 2.

In some embodiments, as depicted in FIGs. 1 to 3, the above described ammonia gas supply system 2 further includes a bypass line 42 and a thermostat 43. The bypass line 42 has a first end connected to the cooling liquid circulation line 4 at the upstream side of the cooling device 41, and a second end connected to the cooling liquid circulation line 4 at the upstream side of the cooling device 41 bypassing the cooling device 41. The thermostat 43 is configured to allow
the cooling liquid flowing at the upstream side of a connection part 46 of the cooling liquid circulation line 4 connected to a first end of the bypass line 42 to pass through one of the cooling device 41 or the bypass line 42.

The thermostat 43 is configured to open the flow passage toward one of the cooling device 41 or the bypass line 42 and close the flow passage toward the other one of the cooling device 41 or the bypass line 42 depending on the temperature of the cooling liquid introduced to the thermostat 43. The above described cooling liquid introduction line 5, 5A is connected to the upstream side of the connection part 46 of the cooling liquid circulation line 4 connected to the first end of the bypass line 42. The above described cooling liquid return line 6, 6A is connected to the upstream side of the connection part 46 of the cooling liquid circulation line 4 and at the downstream side of a connection part 44 of the cooling liquid circulation line 4 to which the cooling liquid introduction line 5, 5A is connected.

With the above configuration, the thermostat 43 opens or closes depending on the temperature of the cooling liquid that circulates through the cooling liquid circulation line 4, and the cooling liquid may not always pass through the cooling device 41 or the bypass line 42. The cooling liquid flows through the cooling liquid circulation line 4 at the upstream side of the connection part 46 regardless of the temperature of the cooling liquid that circulates through the cooling liquid circulation line 4, and thus it is possible to guide the cooling liquid stably to the cooling liquid introduction line 5, 5A.

In some embodiments, as depicted in FIGs. 1 to 3, 5 and 6, an internal combustion engine system 1 includes the above described ammonia gas supply system 2 and the above described internal combustion engine 3. In this case, it is possible to supply a required amount of ammonia gas to the internal combustion engine 3 with the ammonia gas supply system 2 regardless of the operation state of the internal combustion engine 3, and thus it is possible to stably operate the internal combustion engine 3.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

Embodiments of the present invention were described in detail above, but the present invention is not limited thereto, and various amendments and modifications may be implemented.

The contents described in the above respective embodiments can be understood as follows, for instance.
(1) An ammonia gas supply system (2) according to at least one embodiment of the present disclosure includes: an ammonia storage tank (21) configured to be capable of storing liquid ammonia; a tank heater (22) configured to heat the ammonia storage tank (21) and gasify the liquid ammonia stored inside the ammonia storage tank (21); and an ammonia gas introduction line (23) for introducing an ammonia gas obtained by gasifying the liquid ammonia inside the ammonia storage tank (21) to an internal combustion engine (3).

With the above configuration (1), it is possible to introduce the ammonia gas that has been gasified inside the ammonia storage tank (21) by the tank heater (22) to the internal combustion engine (3) via the ammonia gas introduction line (23). The ammonia storage tank (21) has a large capacity for storing an ammonia gas, and thus it is possible to supply an ammonia gas to the internal combustion engine (3) stably via the ammonia gas introduction line (23). That is, while the flow rate of ammonia gas required by the internal combustion engine (3) may change depending on the load or rotation speed of the internal combustion engine (3), it is possible to supply a required amount of ammonia gas to the internal combustion engine (3) from the ammonia storage tank (21).

(2) In some embodiments, in the ammonia gas supply system (2) described in the above (1), the tank heater (22) is configured to heat the liquid ammonia stored in the ammonia storage tank (21) with exhaust heat discharged from the internal combustion engine (3) at the time of operation of the internal combustion engine (3).

With the above configuration (2), as exhaust heat discharged from the internal combustion engine (3) is utilized as a heat source for heating liquid ammonia, it is no longer necessary to separately provide a heat source for heating liquid ammonia, or it is possible to reduce the size of a separately provided heat source. Therefore, it is possible to suppress complexity of the structure of the ammonia gas supply system (2).

(3) In some embodiments, the ammonia gas supply system (2) described in the above (1) further includes: a cooling liquid circulation line (4) for circulating a cooling liquid for cooling the internal combustion engine (3); a circulation line side pump (P1), disposed in the cooling liquid circulation line (4), for increasing a pressure of the cooling liquid flowing through the cooling liquid circulation line (4); a cooling device (41), disposed in the cooling liquid circulation line (4), for cooling the cooling liquid; and a cooling liquid introduction line (5) for extracting a part of the cooling liquid flowing from the internal combustion engine (3) toward the cooling device (41) from the cooling liquid circulation line (4) and guiding the part of the cooling liquid to the tank heater (22).

With the above configuration (3), it is possible to guide the cooling liquid having recovered thermal energy generated from combustion in the internal combustion engine (3) to the tank heater (22) via the cooling liquid introduction (5). Furthermore, it is possible to heat the liquid ammonia stored the ammonia storage tank (21) with the cooling liquid introduced into the tank heater (22). In this case, the cooling liquid circulation line (4), the circulation line side pump (P1) and the cooling device (41) are devices that are conventionally required to circulate the cooling liquid, and by utilizing the devices to introduce the cooling liquid to the tank heater (22), it is possible to suppress complexity of the structure of the ammonia gas supply system (2).

(4) In some embodiments, the ammonia gas supply system (2) described in the above (3) further includes: a cooling liquid side pump (P2) disposed in the cooling liquid introduction line (5) and configured to increase the pressure of the cooling liquid flowing through the cooling liquid introduction line (5).

With the above configuration (4), the flow rate of the cooling liquid circulating through the cooling liquid circulation line (4) is a constant flow rate corresponding to the rating of the internal combustion engine (3) or a variable flow rate corresponding to the operation state of the internal combustion engine (3) (the load or rotation speed of the internal combustion engine (3)). By providing the cooling liquid side pump (P2) in the cooling liquid introduction line (5), it is possible to stably supply the cooling liquid to the tank heater (22) via the cooling liquid introduction line (5) regardless of the operation state of the internal combustion engine (3). By supplying the cooling liquid to the tank heater (22) stably, it is possible to generate ammonia gas from the liquid ammonia stably inside the ammonia storage tank (21).

(5) In some embodiments, the ammonia gas supply system (2) described in the above (3) or (4) further includes: a cooling liquid return line (6) for returning the cooling liquid from the tank heater (22) to the cooling liquid circulation line (4), the cooling liquid return line (6) having a first end connected to the tank heater (22) and a second end connected to the cooling liquid circulation line (4) between the cooling device (41) and a connection part (44) at which the cooling liquid introduction line (5) is connected to the cooling liquid circulation line (4).

With the above configuration (5), it is possible to return the cooling liquid from the tank heater (22) to the cooling liquid circulation line (4) through the cooling liquid return line (6). In this case, by utilizing the cooling liquid circulation line (4), the circulation line side pump (P1) and the cooling device (41) for circulation of the cooling liquid that passes through the cooling liquid introduction line (5), the tank heater (22), and the cooling liquid return line (6), it is possible to suppress complexity of the structure of the ammonia gas supply system (2).

(6) In some embodiments, the ammonia gas supply system (2) described in any one of the above (3) to (5) further includes: a cooling liquid temperature acquisition device (51) configured to obtain a temperature of the cooling liquid existing inside the tank heater (22) or the cooling liquid flowing through the cooling liquid introduction line (5); and a cooling liquid temperature increasing device (52) disposed in the cooling liquid introduction line (5) at an upstream side of a temperature acquisition position by the cooling liquid temperature acquisition device (51), the cooling liquid temperature increasing device (52) being configured to increase the temperature of the cooling liquid introduced to the tank heater (22) via the cooling liquid introduction line (5) so that the temperature of the cooling liquid obtained by the cooling liquid temperature acquisition device (51) becomes a predetermined value or higher.

With the above configuration (6), in a case where thermal energy that the cooling liquid can recover from the internal combustion engine (3) (exhaust heat) is small, such as at the time of starting the internal combustion engine (3), the temperature of the cooling liquid introduced to the tank heater (22) may become low. With the cooling liquid temperature increasing device (52) configured to increase the temperature of the cooling liquid so that the temperature of the cooling liquid obtained by the cooling liquid temperature acquisition device (51) becomes a predetermined value or higher, it is possible to suppress temperature decrease of the cooling liquid introduced to the tank heater (22), and thus it is possible to stably heat the liquid ammonia stored the ammonia storage tank (21) with the tank heater (22).

(7) In some embodiments, the ammonia gas supply system (2) described in any one of the above (3) to (6) further includes: a cooling liquid temperature acquisition device (51) configured to obtain a temperature of the cooling liquid existing inside the tank heater (22) or the cooling liquid flowing through the cooling liquid introduction line (5); and a cooling liquid temperature decreasing device (53) disposed in the cooling liquid introduction line (5) at an upstream side of a temperature acquisition position by the cooling liquid temperature acquisition device (51), the cooling liquid temperature decreasing device (53) being configured to decrease the temperature of the cooling liquid introduced to the tank heater (22) via the cooling liquid introduction line (5) so that the temperature of the cooling liquid obtained by the cooling liquid temperature acquisition device (51) becomes a predetermined value or lower.

With the above configuration (7), in a case where the load of the internal combustion engine (3) is high and thermal energy that the cooling liquid can recover from the internal combustion engine (3) (exhaust heat) is high, the temperature of the cooling liquid introduced into the tank heater (22) may become high. If the temperature of the cooling liquid introduced to the tank heater (22) becomes too high, an excess amount of ammonia gas may be produced inside the ammonia storage tank (21), and the internal pressure of the ammonia storage tank (21) may become too high. With the cooling liquid temperature decreasing device (53) configured to decrease the temperature of the cooling liquid so that the temperature of the cooling liquid obtained by the cooling liquid temperature acquisition device (51) becomes a predetermined value or lower, it is possible to suppress temperature increase of the cooling liquid introduced to the tank heater (22), and thus it is possible to stably heat the liquid ammonia stored in the ammonia storage tank (21) with the tank heater (22).

(8) In some embodiments, in the ammonia gas supply system (2) described in the above (4), the cooling liquid side pump (P2) is configured such that an output is variable, and the ammonia gas supply system (1) further includes: a cooling liquid temperature acquisition device (51) configured to obtain a temperature of the cooling liquid existing inside the tank heater (22) or the cooling liquid flowing through the cooling liquid introduction line (5); and a control device (54) configured to control the output of the cooling liquid side pump (P2) so that the temperature of the cooling liquid obtained by the cooling liquid temperature acquisition device (51) becomes a predetermined value or lower.

With the above configuration (8), the output of the cooling liquid side pump (P2) is controlled and the flow rate of the cooling liquid introduced to the tank heater (22) is suppressed, so that the temperature of the cooling liquid obtained by the cooling liquid temperature acquisition device (51) becomes a predetermined value or lower, whereby it is possible to suppress temperature increase of the cooling liquid introduced to the tank heater (22), and it is possible to stably heat the liquid ammonia stored in the ammonia storage tank (21) with the heater (22).

(9) In some embodiments, the ammonia gas supply system (2) described in the above (2) further includes an exhaust gas introduction line (11) for guiding exhaust gas discharged from the internal combustion engine (3) to the tank heater (22).

With the above configuration (9), it is possible to guide the exhaust gas generated from combustion in the internal combustion engine (3) to the tank heater (22). Furthermore, it is possible to heat the liquid ammonia stored in the ammonia storage tank (21) with the exhaust gas introduced into the tank heater (22). In this case, the exhaust gas introduction line (11) is a device that is conventionally required to discharge exhaust gas, and by utilizing the device to introduce the exhaust gas to the tank heater (22), it is possible to suppress complexity of the structure of the ammonia gas supply system (2).

(10) In some embodiments, the ammonia gas supply system (2) described in the above (9) further includes: an exhaust gas temperature acquisition device (111) configured to obtain a temperature of the exhaust gas existing inside the tank heater (22) or the exhaust gas flowing through the exhaust gas introduction line (11); and at least one (112, 113) of: an exhaust gas temperature decreasing device (112) disposed in the exhaust gas introduction line (11) at an upstream side of a temperature acquisition position by the exhaust gas temperature acquisition device (111), the exhaust gas temperature decreasing device (112) being configured to decrease the temperature of the exhaust gas introduced to the tank heater (22) via the exhaust gas introduction line (11) so that the temperature of the exhaust gas obtained by the exhaust gas temperature acquisition device (111) becomes a predetermined value or lower; or an exhaust gas temperature increasing device (113) disposed in the exhaust gas introduction line (11) at an upstream side of a temperature acquisition position by the exhaust gas temperature acquisition device (111), the exhaust gas temperature increasing device (113) being configured to increase the temperature of the exhaust gas introduced to the tank heater (22) via the exhaust gas introduction line (11) so that the temperature of the exhaust gas obtained by the exhaust gas temperature acquisition device (111) becomes a predetermined value or higher.

With the above configuration (10), the exhaust gas discharged from the internal combustion engine (3) can recover more thermal energy (exhaust heat) from the internal combustion engine (3) than the cooling liquid, and thus the temperature of the exhaust gas introduced to the tank heater (22) may become high. If the temperature of the exhaust gas introduced to the tank heater (22) becomes too high, an excess amount of ammonia gas may be produced inside the ammonia storage tank (21), and the internal pressure of the ammonia storage tank (21) may become too high. With the exhaust gas temperature decreasing device (112) configured to decrease the temperature of the exhaust gas so that the temperature of the exhaust gas obtained by the exhaust gas temperature acquisition device (111) becomes a predetermined value or lower, it is possible to suppress temperature increase of the exhaust gas introduced to the tank heater (22), and thus it is possible to stably heat the liquid ammonia stored in the ammonia storage tank (21) with the tank heater (22).

With the above configuration (10), in a case where thermal energy that the exhaust gas can recover from the internal combustion engine 3 (exhaust heat) is small, such as at the time of starting the internal combustion engine (3), the temperature of the exhaust gas introduced into the tank heater (22) may become low. With the exhaust gas temperature increasing device (113) configured to increase the temperature of the exhaust gas so that the temperature of the exhaust gas obtained by the exhaust gas temperature acquisition device (111) becomes a predetermined value or higher, it is possible to suppress temperature decrease of the exhaust gas introduced to the tank heater (22), and thus it is possible to stably heat the liquid ammonia stored in the ammonia storage tank (21) with the tank heater (22).

(11) In some embodiments, the ammonia gas supply system (2) described in the above (1) further includes: a heating medium circulation line (7) for circulating a heating medium for heating the ammonia storage tank (21), the heating medium circulation line (7) having a first end connected to an introduction port (221) of the tank heater (22) and a second end connected to a discharge port (222) of the tank heater (22); a heating medium side pump (P3) disposed in the heating medium circulation line (7) and configured to increase a pressure of the heating medium flowing through the heating medium circulation line (7); a heating medium storage tank (71) disposed in the heating medium circulation line (7) and configured to store the heating medium; and a heat retention device (72) configured to retain heat of the heating medium stored in the heating medium storage tank (71) with exhaust heat discharged from the internal combustion engine at the time of operation of the internal combustion engine (3).

With the above configuration (11), by retaining heat of the heating medium stored in the heating medium storage tank (71) with the heat retention device (72), it is possible to suppress temperature decrease of the heating medium introduced to the tank heater (22) via the heating medium circulation line (7). Accordingly, for instance, even in a case where thermal energy that the cooling liquid can recover from the internal combustion engine (3) (exhaust heat) is small, such as at the time of starting the internal combustion engine (3), it is possible to heat the liquid ammonia stored in the ammonia storage tank (21) stably with the tank heater (22). Thus, with the above configuration (11), it is possible to produce an
ammonia gas by heating liquid ammonia with the tank heater (22) also at the time of starting the internal combustion engine (3), and thus it is possible to reduce the time from start of the internal combustion engine (3) until it is possible to supply an ammonia gas to the internal combustion engine (3).

(12) In some embodiments, the ammonia gas supply system (2) described in the above (11) further includes: a cooling liquid circulation line (4) for circulating a cooling liquid for cooling the internal combustion engine (3); a circulation line side pump (P1), disposed in the cooling liquid circulation line (4), for increasing a pressure of the cooling liquid flowing through the cooling liquid circulation line (4); a cooling device (41), disposed in the cooling liquid circulation line (4), for cooling the cooling liquid; and a cooling liquid introduction line (5A) for extracting a part of the cooling liquid flowing from the internal combustion engine (3) toward the cooling device (41) from the cooling liquid circulation line (4) and guiding the part of the cooling liquid to the heat retention device (72).

With the above configuration (12), it is possible to guide the cooling liquid having recovered thermal energy generated from combustion in the internal combustion engine (3) to the heat retention device (72) via the cooling liquid introduction line (5A). Furthermore, it is possible to heat the heating medium stored in the heating medium storage tank (71) with the cooling liquid introduced to the heat retention device (72). In this case, as exhaust heat discharged from the internal combustion engine (3) is utilized as a heat source for heating liquid ammonia (heat source for retaining heat of the heating medium), it is no longer necessary to separately provide a heat source for heating liquid ammonia, or it is possible to reduce the size of a separately provided heat source. Therefore, it is possible to suppress complexity of the structure of the ammonia gas supply system (2). Furthermore, the cooling liquid circulation line (4), the circulation line side pump (P1) and the cooling device (41) are devices that are conventionally required to circulate the cooling liquid, and also by utilizing the devices to introduce the cooling liquid to the heat retention device (72), it is possible to suppress complexity of the structure of the ammonia gas supply system (2).

(13) In some embodiments, the ammonia gas supply system (2) described in the above (11) or (12) further includes: a heating medium temperature acquisition device (73) configured to obtain a temperature of the heating medium existing inside the tank heater (22) or the heating medium flowing through the heating medium circulation line from the heating medium storage tank (71) toward the tank heater (22); and a heating medium temperature adjustment device (74) configured to adjust the temperature of the heating medium introduced into the tank heater (22) via the heating medium circulation line (7) so that the temperature of the heating medium obtained by the heating medium temperature acquisition device (73) becomes a predetermined value or lower.

With the above configuration (13), the temperature of the heating medium introduced into the tank heater (22) is suppressed by the heating medium temperature adjustment device (74) so that the temperature of the heating medium obtained by the heating medium temperature acquisition device (73) becomes a predetermined value or lower, and thus it is possible to suppress temperature increase of the heating medium introduced into the tank heater (22), whereby it is possible to stably heat the liquid ammonia stored in the ammonia storage tank (21) with the tank heater (22).

(14) In some embodiments, the ammonia gas supply system (2) described in the above (3) to (8), (12) or (13) further includes: a bypass line (42) having a first end connected to the cooling liquid circulation line (4) at an upstream side of the cooling device (41) and a second end connected to the cooling liquid circulation line (4) at a downstream side of the cooling device (41) bypassing the cooling device (41); and a thermostat (43) configured to allow the cooling liquid flowing through an upstream side of a connection part (46) at which the cooling liquid circulation line (4) is connected to the first end of the bypass line (42) to pass through the cooling device (41) or the bypass line (42). The cooling liquid introduction line (5, 5A) is connected to the cooling liquid circulation line (4) at the upstream side of the connection part (46) connected to the first end of the bypass line (42).

With the above configuration (14), the thermostat (43) opens or closes depending on the temperature of the cooling liquid that circulates through the cooling liquid circulation line (4), and the cooling liquid may not always pass through the cooling device (41) or the bypass line (42). The cooling liquid flows through the cooling liquid circulation line (4) at the upstream side of the connection part (46) regardless of the temperature of the cooling liquid that circulates through the cooling liquid circulation line (4), and thus it is possible to guide the cooling liquid stably to the cooling liquid introduction line (5, 5A).

(15) An internal combustion engine system (1) according to at least one embodiment of the present disclosure includes: an internal combustion engine (3) which uses an ammonia gas as a fuel; and the ammonia gas supply system (2) according to any one of the above (1) to (14).

With the above configuration (15), it is possible to supply a required amount of ammonia gas to the internal combustion engine (3) with the ammonia gas supply system (2) regardless of the operation state of the internal combustion engine (3), and thus it is possible to stably operate the internal combustion engine (3).

### Reference Signs List

- 1: Internal combustion engine system
- 2: Ammonia gas supply system
- 3: Internal combustion engine
- 4: Cooling liquid circulation line
- 5, 5A: Cooling liquid introduction line
- 6, 6A: Cooling liquid return line
- 7: Heating medium circulation line
- 11, 11A: Exhaust gas introduction line
- 21: Ammonia storage tank
- 22: Tank heater
- 23: Ammonia gas introduction line
- 41: Cooling device
- 42: Bypass line
- 43: Thermostat
- 51: Cooling liquid temperature acquisition device
- 52: Cooling liquid temperature increasing device
- 53: Cooling liquid temperature decreasing device
- 54: Control device
- 71: Heating medium storage tank
- 72: Heat retention device
- 73: Heating medium temperature acquisition device
- 74: Heating medium temperature adjustment device
- 111: Exhaust gas temperature acquisition device
- 112: Exhaust gas temperature decreasing device
- 113: Exhaust gas temperature increasing device
- P1: Circulation line side pump
- P2: Cooling liquid side pump
- P3: Heating medium side pump

## Claims

1. An ammonia gas supply system, comprising:
an ammonia storage tank configured to be capable of storing liquid ammonia;
a tank heater configured to heat the ammonia storage tank and gasify the liquid ammonia stored inside the ammonia storage tank; and
an ammonia gas introduction line for introducing an ammonia gas obtained by gasifying the liquid ammonia inside the ammonia storage tank to an internal combustion engine.

2. The ammonia gas supply system according to claim 1,
wherein the tank heater is configured to heat the liquid ammonia stored in the ammonia storage tank with exhaust heat discharged from the internal combustion engine at the time of operation of the internal combustion engine.

3. The ammonia gas supply system according to claim 2, further comprising:
a cooling liquid circulation line for circulating a cooling liquid for cooling the internal combustion engine;
a circulation line side pump, disposed in the cooling liquid circulation line, for increasing a pressure of the cooling liquid flowing through the cooling liquid circulation line;
a cooling device, disposed in the cooling liquid circulation line, for cooling the cooling liquid; and
a cooling liquid introduction line for extracting a part of the cooling liquid flowing from the internal combustion engine toward the cooling device from the cooling liquid circulation line and guiding the part of the cooling liquid to the tank heater.

4. The ammonia gas supply system according to claim 3, further comprising:
a cooling liquid side pump disposed in the cooling liquid introduction line and configured to increase the pressure of the cooling liquid flowing through the cooling liquid introduction line.

5. The ammonia gas supply system according to claim 3 or 4, further comprising:
a cooling liquid return line for returning the cooling liquid from the tank heater to the cooling liquid circulation line, the cooling liquid return line having a first end connected to the tank heater and a second end connected to the cooling liquid circulation line between the cooling device and a connection part at which the cooling liquid introduction line is connected to the cooling liquid circulation line.

6. The ammonia gas supply system according to claim 3 or 4, further comprising:
a cooling liquid temperature acquisition device configured to obtain a temperature of the cooling liquid existing inside the tank heater or the cooling liquid flowing through the cooling liquid introduction line; and
a cooling liquid temperature increasing device disposed in the cooling liquid introduction line at an upstream side of a temperature acquisition position by the cooling liquid temperature acquisition device, the cooling liquid temperature increasing device being configured to increase the temperature of the cooling liquid introduced to the tank heater via the cooling liquid introduction line so that the temperature of the cooling liquid obtained by the cooling liquid temperature acquisition device becomes a predetermined value or higher.

7. The ammonia gas supply system according to claim 3 or 4, further comprising:
a cooling liquid temperature acquisition device configured to obtain a temperature of the cooling liquid existing inside the tank heater or the cooling liquid flowing through the cooling liquid introduction line; and
a cooling liquid temperature decreasing device disposed in the cooling liquid introduction line at an upstream side of a temperature acquisition position by the cooling liquid temperature acquisition device, the cooling liquid temperature decreasing device being configured to decrease the temperature of the cooling liquid introduced to the tank heater via the cooling liquid introduction line so that the temperature of the cooling liquid obtained by the cooling liquid temperature acquisition device becomes a predetermined value or lower.

8. The ammonia gas supply system according to claim 4,
wherein the cooling liquid side pump is configured such that an output is variable, and
wherein the ammonia gas supply system further comprises:
a cooling liquid temperature acquisition device configured to obtain a temperature of the cooling liquid existing inside the tank heater or the cooling liquid flowing through the cooling liquid introduction line; and
a control device configured to control the output of the cooling liquid side pump so that the temperature of the cooling liquid obtained by the cooling liquid temperature acquisition device becomes a predetermined value or lower.

9. The ammonia gas supply system according to claim 2, further comprising:
an exhaust gas introduction line for guiding exhaust gas discharged from the internal combustion engine to the tank heater.

10. The ammonia gas supply system according to claim 9, further comprising:
an exhaust gas temperature acquisition device configured to obtain a temperature of the exhaust gas existing inside the tank heater or the exhaust gas flowing through the exhaust gas introduction line; and
at least one of:
an exhaust gas temperature decreasing device disposed in the exhaust gas introduction line at an upstream side of a temperature acquisition position by the exhaust gas temperature acquisition device, the exhaust gas temperature decreasing device being configured to decrease the temperature of the exhaust gas introduced to the tank heater via the exhaust gas introduction line so that the temperature of the exhaust gas obtained by the exhaust gas temperature acquisition device becomes a predetermined value or lower; or
an exhaust gas temperature increasing device disposed in the exhaust gas introduction line at an upstream side of a temperature acquisition position by the exhaust gas temperature acquisition device, the exhaust gas temperature increasing device being configured to increase the temperature of the exhaust gas introduced to the tank heater via the exhaust gas introduction line so that the temperature of the exhaust gas obtained by the exhaust gas temperature acquisition device becomes a predetermined value or higher.

11. The ammonia gas supply system according to claim 1, further comprising:
a heating medium circulation line for circulating a heating medium for heating the ammonia storage tank, the heating medium circulation line having a first end connected to an introduction port of the tank heater and a second end connected to a discharge port of the tank heater;
a heating medium side pump disposed in the heating medium circulation line and configured to increase a pressure of the heating medium flowing through the heating medium circulation line;
a heating medium storage tank disposed in the heating medium circulation line and configured to store the heating medium; and
a heat retention device configured to retain heat of the heating medium stored in the heating medium storage tank with exhaust heat discharged from the internal combustion engine at the time of operation of the internal combustion engine.

12. The ammonia gas supply system according to claim 11, further comprising:
a cooling liquid circulation line for circulating a cooling liquid for cooling the internal combustion engine;
a circulation line side pump, disposed in the cooling liquid circulation line, for increasing a pressure of the cooling liquid flowing through the cooling liquid circulation line;
a cooling device, disposed in the cooling liquid circulation line, for cooling the cooling liquid; and
a cooling liquid introduction line for extracting a part of the cooling liquid flowing from the internal combustion engine toward the cooling device from the cooling liquid circulation line and guiding the part of the cooling liquid to the heat retention device.

13. The ammonia gas supply system according to claim 11 or 12, further comprising:
a heating medium temperature acquisition device configured to obtain a temperature of the heating medium existing inside the tank heater or the heating medium flowing through the heating medium circulation line from the heating medium storage tank toward the tank heater; and
a heating medium temperature adjustment device configured to adjust the temperature of the heating medium introduced into the tank heater via the heating medium circulation line so that the temperature of the heating medium obtained by the heating medium temperature acquisition device becomes a predetermined value or lower.

14. The ammonia gas supply system according to any one of claims 3, 4, 8, or 12, further comprising:
a bypass line having a first end connected to the cooling liquid circulation line at an upstream side of the cooling device and a second end connected to the cooling liquid circulation line at a downstream side of the cooling device bypassing the cooling device; and
a thermostat configured to allow the cooling liquid flowing through an upstream side of a connection part at which the cooling liquid circulation line is connected to the first end of the bypass line to pass through the cooling device or the bypass line,
wherein the cooling liquid introduction line is connected to the cooling liquid circulation line at the upstream side of the connection part connected to the first end of the bypass line.

15. An internal combustion engine system, comprising:
an internal combustion engine which uses an ammonia gas as a fuel; and
the ammonia gas supply system according to any one of claims 1 to 4, 8 to 12.
